# EUROPÄISCHE PATENTSCHRIFT

(11) **EP 1 874 583 B1**
(45) Veröffentlichungstag und Bekanntmachung des Hinweises auf die Patenterteilung: **07.09.2011**
(21) Anmeldenummer: 06722781.9
(22) Anmeldetag: 10.04.2006
(51) Int. Cl.: B60N 2/12

(54) **KRAFTFAHRZEUGSITZANORDNUNG**
MOTOR VEHICLE SEAT ARRANGEMENT
DISPOSITIF DE SIEGE D'AUTOMOBILE

(30) Priorität: 22.04.2005 DE 202005006901 U
(43) Veröffentlichungstag der Anmeldung: 09.01.2008
(73) Patentinhaber: Brose Fahrzeugteile GmbH & Co. KG, Coburg, 96450 Coburg (DE)
(72) Erfinder: PETTERSSON, Joergen, 42542 Hisings Kärra (SE); HÖPFNER, Andreas, 98617 Vachdorf (DE)
(74) Vertreter: Baumgärtel, Gunnar
(86) Internationale Anmeldenummer: PCT/DE2006/000644
(87) Internationale Veröffentlichungsnummer: WO 2006/111134

(56) Entgegenhaltungen:
- EP-A- 0 800 952
- EP-A- 0 960 763
- WO-A-02/094606
- US-A- 5 688 026
- PATENT ABSTRACTS OF JAPAN Bd. 001, Nr. 161 (M-053), 20. Dezember 1977 (1977-12-20) & JP 52 105427 A (NISSAN MOTOR CO LTD; others: 01), 3. September 1977 (1977-09-03)

## Beschreibung

Die Erfindung betrifft eine Kraftfahrzeugsitzanordnung nach dem Oberbegriff des Anspruchs 1.

Eine derartige Kräftfahrzeugsitzanordnung umfasst ein Sitzgestell; eine schwenkbar am Sitzgestell gelagerte Rückenlehne, die aus mindestens einer Gebrauchsposition, in der sie zum Abstützen des Rückens eines Sitzbenutzers dient, in Richtung auf eine Sitzfläche des Sitzgestells vorklappbar ist; eine Längsführung, mit der das Sitzgestell zur Einstellung der Sitzlängsposition entlang einer Sitzlängsrichtung bewegbar ist; eine Feststellvorrichtung zum Arretieren des Sitzgestells in einer zuvor eingestellten Sitzlängsposition; sowie einen Koppelmechanismus, über den die Feststellvorrichtung derart mit der Rückenlehne gekoppelt ist, dass durch Vorklappen der Rückenlehne in Richtung auf die Sitzfläche die Feststellvorrichtung entriegelt wird. Das heißt, der Koppelmechanismus wirkt auf die Feststellvorrichtung ein und entriegelt diese, wenn die Rückenlehne in Richtung auf die Sitzfläche des Sitzgestells vorgeklappt ist.

Eine derartige Anordnung an einem Kraftfahrzeugsitz wird als Einstiegshilfe oder "Easy-Entry-Mechanismus" bezeichnet, mit dem bei zweitürigen Kraftfahrzeugen das Einsteigen von Fahrzeuginsassen auf die hinteren Sitze eines Kraftfahrzeugs erleichtert werden kann. Hierzu wird bei einem mit einer Einstiegshilfe bzw. einem Easy-Entry-Mechanismus ausgerüsteten Vordersitz die Rückenlehne in Richtung auf die Sitzfläche vorgeklappt, wodurch die Feststellvorrichtung der Sitzlängsführung des entsprechenden Kraftfahrzeugsitzes entriegelt wird und der Kraftfahrzeugsitz in Sitzlängsrichtung in eine vorverlagerte Position verschoben werden kann, so dass Fahrzeuginsassen hinter diesem Sitz bequem in das Kraftfahrzeug ein- oder aus diesem aussteigen können.

Kraftfahrzeugsitzanordnungen mit Easy-Entry-Mechanismus sind beispielsweise aus der WO 02/094606 A1 und der EP 0 800 952 A1 bekannt.

Prallt auf ein parkendes Kraftfahrzeug, dessen Easy-Entry-Mechanismus betätigt ist und in das bei mit vorgeklappter Rückenlehne vorverlagertem Vordersitz Personen einsteigen, ein Drittfahrzeug auf (Crash-Fall), so kann es zu einer starken Beschleunigung des Vordersitzes kommen, bei dem ja die der Sitzlängsführung zugeordnete Feststellvorrichtung wegen der vorgeklappten Rückenlehne entriegelt ist, so dass der Sitz frei in Sitzlängsrichtung bewegt werden kann.

Der Erfindung liegt daher das Problem zugrunde, eine Kraftfahrzeugsitzanordnung der eingangs genannten Art zu schaffen, bei der das Risiko einer unkontrollierten Verlagerung eines Kraftfahrzeugsitzes im Fall des Aufpralles eines Drittfahrzeugs während der Ausübung der Easy-Entry-Funktion reduziert wird.

Dieses Problem wird erfindungsgemäß durch die Schaffung einer Kraftfahrzeugsitzanordnung mit den Merkmalen des Anspruchs 1 gelöst.

Danach ist zusätzlich zu dem ersten Koppelmechanismus, über den die Feststellvorrichtung mit der vorklappbaren Rückenlehne gekoppelt ist, ein zweiter Koppelmechanismus vorgesehen, über den die Feststellvorrichtung derart mit einem von der Rückenlehne verschiedenen Betätigungsmechanismus gekoppelt ist, dass die Feststellvorrichtung nur dann entriegelt ist, wenn die Rückenlehne in Richtung auf die Sitzfläche vorgeklappt ist und zusätzlich der dem zweiten Koppelmechanismus zugeordnete Betätigungsmechanismus zur Entriegelung der Feststellvorrichtung betätigt ist.

Erfindungsgemäß genügt es also nicht für die Entriegelung der Feststellvorrichtung zur Ausübung der Easy-Entry-Funktion, die Rückenlehne in Richtung auf die Sitzfläche vorzuklappen, sondern es muss zusätzlich ein von der Rückenlehne verschiedener Betätigungsmechanismus betätigt werden, der über einen zweiten Koppelmechanismus (ebenso wie die Rückenlehne über den ersten Koppelmechanismus) mit der Feststellvorrichtung gekoppelt ist.

Kommt es bei einer derartigen Kraftfahrzeugsitzanordnung während der Ausübung der Easy-Entry-Funktion zu einem Aufprall durch ein Drittfahrzeug, so wird die Entriegelung der Feststellvorrichtung automatisch aufgehoben, wenn diejenige Person, die den Kraftfahrzeugsitz gerade zur Ausübung der Easy-Entry-Funktion nach vorne verschiebt, den Sitz (bzw. zumindest den Betätigungsmechanismus des zweiten Koppelmechanismus) loslässt und hierdurch auch nicht mehr den dem zweiten Koppelmechanismus zugeordneten Easy-Entry-Mechanismus betätigt. Es besteht daher keine Gefahr, dass der Kraftfahrzeugsitz durch einen Aufprall während Ausübung der Easy-Entry-Funktion mit vorgeklappter Rückenlehne durch unkontrollierte Verlagerung gegen einen Fahrzeuginsassen prallen könnte. Denn sofern nicht zusätzlich zu dem Vorklappen der Rückenlehne noch der von der Rückenlehne separate Betätigungsmechanismus, welcher über einen eigenen, zweiten Koppelmechanismus mit der Feststellvorrichtung gekoppelt ist, betätigt wird, ist die der Sitzlängsführung zugeordnete Feststellvorrichtung nicht entriegelt, so dass eine Bewegung des Kraftfahrzeugsitzes in Sitzlängsrichtung nicht möglich ist.

Hierbei ist zu beachten, dass aus Sicherheitsgründen die einer Sitzlängsführung zugeordnete Feststellvorrichtung stets in Richtung auf den verriegelten Zustand vorgespannt ist, in dem sie den Kraftfahrzeugsitz in einer aktuell eingestellten Sitzlängsposition arretiert. Die Feststellvorrichtung befindet sich daher immer nur dann im entriegelten Zustand, wenn durch einen zugeordneten Entriegelungsmechanismus aktiv auf die Feststellvorrichtung eingewirkt wird, um diese im entriegelten Zustand zu halten. Und eben dies ist bei der erfindungsgemäß gestalteten Kraftfahrzeugsitzanordnung nicht allein durch Vorklappen der Rückenlehne auf die Sitzfläche möglich, sondern nur durch Vorklappen der Rückenlehne auf die Sitzfläche und gleichzeitiges Betätigen des von der Rückenlehne verschiedenen Betätigungsmechanismus.

Dass der Betätigungsmechanismus von der Rückenlehne verschieden ist, schließt dabei nicht aus, dass jener Betätigungsmechanismus an der Rückenlehne angeordnet sein kann, z. B. in Form eines an der Rückenlehne gelagerten Betätigungshebels. Wichtig ist aber, dass es sich bei diesem Betätigungsmechanismus insofern um eine zusätzliche Funktion handelt, als dass dieser nicht allein durch Vorklappen der Rückenlehne ausgelöst wird. Erforderlich ist vielmehr eine zusätzliche, separate Krafteinwirkung auf den Betätigungsmechanismus, so dass Vorklappen der Rückenlehne allein nicht genügt, um bei Ausübung der Easy-Entry-Funktion die Feststellvorrichtung zu entriegeln.

Hierzu ist der Betätigungsmechanismus von einem ersten Zustand, in dem der dem Betätigungsmechanismus nachgeordnete zweite Koppelmechanismus nicht zur Entriegelung der Feststellvorrichtung auf diese einwirkt, in einen zweiten Zustand überführbar, in dem der zweite Koppelmechanismus zur Entriegelung der Feststellvorrichtung auf diesen einwirkt, wobei jedoch die Feststellvorrichtung nur dann entriegelt ist, wenn sowohl die Rückenlehne in Richtung auf die Sitzfläche des Sitzgestells vorgeklappt ist als auch der Betätigungsmechanismus in den zweiten Zustand überführt ist. Der Betätigungsmechanismus ist hierbei bevorzugt manuell betätigbar.

Gemäß einer bevorzugten Ausführungsform der Erfindung ist der Betätigungsmechanismus mittels eines elastischen Elementes in Richtung auf den Zustand vorgespannt, in dem der nachgeordnete zweite Koppelmechanismus die Feststellvorrichtung nicht entriegelt, so dass eine Entriegelung nur dann erfolgt, wenn zusätzlich zum Vorklappen der Rückenlehne der Betätigungsmechanismus unter Einwirkung einer äußeren Kraft in den Zustand überführt wird, in dem er den nachgeordneten Koppelmechanismus zur Entriegelung der Festestellvorrichtung betätigt.

Nach einer Weiterbildung der Erfindung dient der Betätigungsmechanismus gleichzeitig als Entriegelungshebel, durch dessen Betätigung eine in ihrer Gebrauchsposition befindliche Rückenlehne überhaupt erst entriegelt werden kann, so dass sie sich in Richtung auf die Sitzfläche vorklappen lässt. Zur Ausübung der Easy-Entry-Funktion genügt es hierbei aber erfindungsgemäß nicht, einmal jenen gleichzeitig als Entriegelungshebel dienenden Betätigungsmechanismus zu betätigen, um die Rückenlehne in Richtung auf die Sitzfläche vorzuklappen. Vielmehr bedarf es einer fortdauernden Einwirkung auf den Betätigungsmechanismus bei vorgeklappter Rückenlehne, um die dem Kraftfahrzeugsitz zugeordnete Feststellvorrichtung im entriegelten Zustand zu halten und hierdurch den Kraftfahrzeugsitz in Sitzlängsrichtung verschieben zu können.

Die vorklappbare Rückenlehne einerseits und der hiervon verschiedene Betätigungsmechanismus andererseits sind jeweils über einen eigenen, ersten bzw. zweiten Koppelmechanismus mit der der Sitzlängsführung zugeordneten Feststellvorrichtung gekoppelt, wobei der jeweilige Koppelmechanismus zur Kraftübertragung zwischen vorklappbarer Rückenlehne bzw. Betätigungsmechanismus einerseits und Feststellvorrichtung andererseits bevorzugt ein Zugmittel umfasst.

### Konkret kann vorgesehen sein, dass

- die vorklappbare Rückenlehne einerseits und der hiervon verschiedene Betätigungsmechanismus andererseits über zwei unterschiedliche Koppelmechanismen mit der Feststellvorrichtung gekoppelt sind, wobei der erste Koppelmechanismus durch ein Vorklappen der Rückenlehne betätigbar ist und der zweite Koppelmechanismus durch Krafteinwirkung auf den Betätigungsmechanismus betätigbar ist, und/oder
- ein Ende des ersten Koppelmechanismus derart mit der Rückenlehne verbunden ist, dass dieser beim Vorklappen der Rückenlehne in Richtung auf die Sitzfläche betätigt wird, und/oder
- ein Ende des zweiten Koppelmechanismus derart mit dem Betätigungsmechanismus verbunden ist, dass durch Betätigung des Betätigungsmechanismus der zweite Koppelmechanismus zur Entriegelung der Feststellvorrichtung auf diese einwirken kann.

Gemäß einer vorteilhaften Weiterbildung der Erfindung ist einer der beiden Koppelmechanismen, also der erste oder der zweite Koppelmechanismus, über eine Komponente des jeweils anderen der beiden Koppelmechanismen mit der Feststellvorrichtung gekoppelt, z. B. dadurch, dass die besagte Komponente des anderen der beiden Koppelmechanismen beweglich, insbesondere schwenkbar, auf einer Komponente des einen der beiden Koppelmechanismen gelagert ist.

Bei Betätigung des einen (ersten oder zweiten) Koppelmechanismus (durch Vorklappen der Rückenlehne oder durch Bedienung des Betätigungsmechanismus) wird dann die besagte Komponente des anderen Koppelmechanismus an ein Entriegelungselement der Feststellvorrichtung herangeführt, ohne dass es jedoch hierdurch bereits zur Entriegelung der Feststellvorrichtung kommt. Hierzu ist es vielmehr zusätzlich erforderlich, dass durch Betätigen des anderen Koppelmechanismus die eine Komponente jenes anderen Koppelmechanismus zur Entriegelung auf das besagte Entriegelungselement der Feststellvorrichtung einwirkt. Diese Einwirkung ist aber wiederum bei Betätigung des anderen Koppelmechanismus nur dann möglich, wenn gleichzeitig jene Komponente durch Betätigung des einen Koppelmechanismus näher an das Entriegelungselement der Feststellvorrichtung herangeführt worden ist.

Weitere Einzelheiten und Vorteile der Erfindung werden bei der nachfolgenden Beschreibung eines Ausführungsbeispieles anhand der Figuren deutlich werden.

Es zeigen:

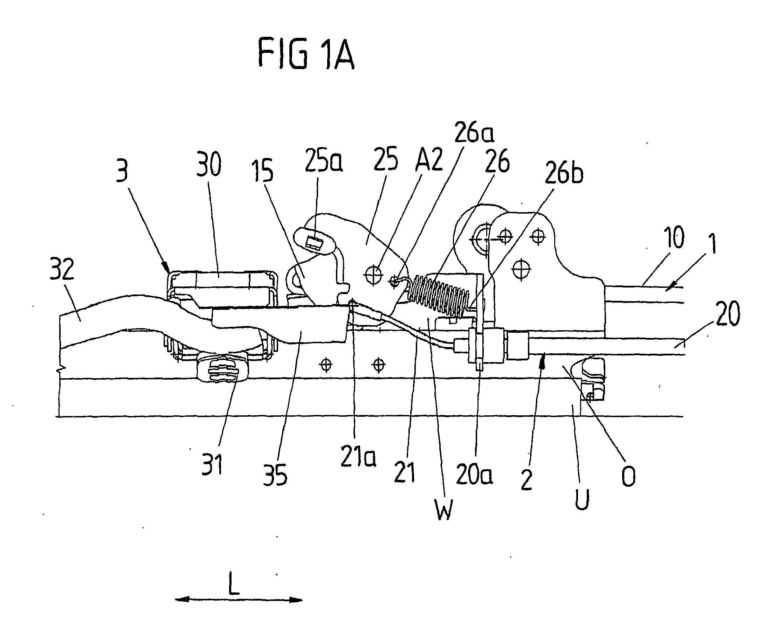

- Figur 1a: eine Feststellvorrichtung zur Arretierung einer Sitzlängsführung für einen Kraftfahrzeugsitz in einer zuvor eingestellten Sitzlängsposition mit zwei zugeordneten Koppelmechanismen, über die die Feststellvorrichtung einerseits mit einer vorklappbaren Rückenlehne des Kraftfahrzeugsitzes und andererseits mit einem hiervon separaten Betätigungsmechanismus zur Entriegelung gekoppelt ist in einer Seitenansicht;
- Figur 1 b: eine perspektivische Draufsicht auf die Anordnung aus Figur 1 a;
- Figur 2: die Anordnung aus Figur 1a bei vorgeklappter Rückenlehne, jedoch unbetätigtem Betätigungsmechanismus;
- Figur 3: die Anordnung aus den Figuren 1a und 1b bei aufrechter Rückenlehne und betätigtem Betätigungsmechanismus;
- Figur 4: die Anordnung aus den Figuren 1a und 1b bei vorgeklappter Rückenlehne und betätigtem Betätigungsmechanismus;
- Figur 5: eine schematische Seitenansicht eines Sitzgestells für einen Kraftfahrzeugsitz, das mittels einer Sitzlängsführung in Sitzlängsrichtung beweglich ist und eine aus einem Gebrauchsbereich in Richtung auf eine Sitzfläche des Sitzgestells vorklappbare Rückenlehne aufweist.

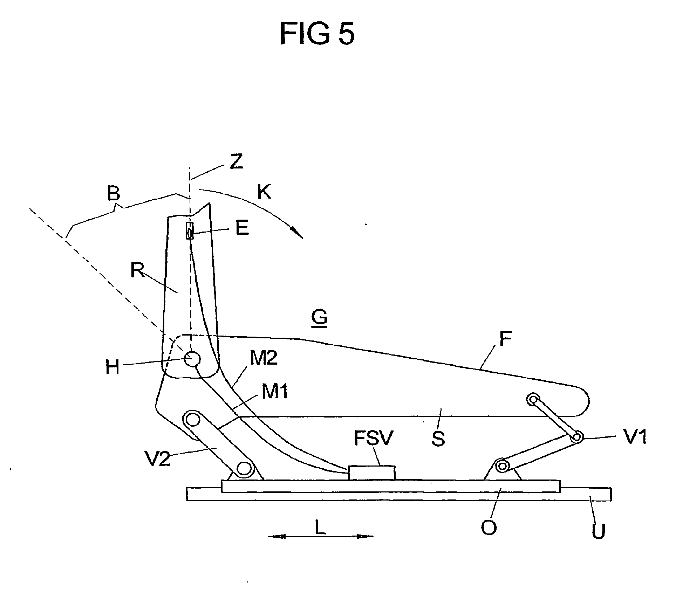

Das in Figur 5 in einer Seitenansicht dargestellte Sitzgestell G umfasst eine Sitzschiene (Oberschiene O), die in Sitzlängsrichtung L beweglich auf einer an der Fahrzeugkarosserie eines Kraftfahrzeugs zu befestigenden Unterschiene U lagert, und ein Sitzseitenteil S, das über vordere und hintere Gelenkhebel V1, V2 höhenverstellbar an der Sitzschiene O angelenkt ist. Auf seiner anderen, in Figur 5 nicht erkennbaren Längsseite weist das Sitzgestell G eine entsprechende Anordnung auf. Zwischen den beiden Sitzseitenteilen S des Sitzgestells G erstreckt sich eine Sitzfläche F, die ein Sitzpolster aufnimmt, auf dem ein Fahrzeuginsasse Platz nehmen kann.

An den ein Sitzuntergestell bildenden Sitzseitenteilen S ist eine mittels eines Handhebels H neigungsverstellbare Rückenlehne R schwenkbar angelenkt. Der Handhebel H dient dabei zur Einstellung der Rückenlehne in einem Gebrauchsbereich B, in dem die Rückenlehne R zum Abstützen des Rückens eines Sitzbenutzers vorgesehen ist. Die Neigung der Rückenlehne R ist in diesem Gebrauchsbereich B jeweils durch eine charakteristische Neigung bezüglich einer Bezugsachse, z. B. der vertikalen Fahrzeugachse Z, charakterisiert.

Wird ein derartiger in Sitzlängsrichtung L verstellbarer und in seiner jeweiligen Sitzlängsposition mittels einer Feststellvorrichtung FSV verriegelbarer Kraftfahrzeugsitz als Vordersitz für ein zweitüriges Kraftfahrzeug verwendet, so ist es bekannt, zur Erleichterung des Einstiegs in den Fond des Kraftfahrzeugs die Rückenlehne R an die Feststellvorrichtung FSV der Sitzlängsführung derart zu koppeln, dass bei einem Vorklappen der Rückenlehne R in einer Klapprichtung K auf die Sitzfläche F die Feststellvorrichtung FSV entriegelt wird. Der Sitz lässt sich dann mit entriegelter Feststellvorrichtung FSV mittels der Sitzlängsführung O, U in Sitzlängsrichtung L in eine vorverlagerte Position verschieben, so dass der Einstieg von Personen in den Fond des Kraftfahrzeugs sowie deren späterer Ausstieg erleichtert werden kann. Eine solche Funktion wird als Easy-Entry-Funktion bezeichnet.

Bei einer derartigen Anordnung besteht jedoch insofern ein Risiko, als das im Fall eines Aufpralls auf das stehende Kraftfahrzeug während Ausübung der Easy-Entry-Funktion der durch Vorklappen der Rückenlehne entriegelte Kraftfahrzeugsitz erheblich beschleunigt und somit unkontrolliert verschoben werden kann.

Zur Beseitigung dieses Risikos ist vorliegend nicht nur die Rückenlehne R selbst über einen Koppelmechanismus M1 zur Entriegelung der Feststellvorrichtung FSV mit dieser verbunden, sondern darüber hinaus auch ein an der Rückenlehne R vorgesehener Betätigungsmechanismus in Form eines Betätigungselementes E (Lehnenhebel), das über einen zweiten Koppelmechanismus M2 mit der Feststellvorrichtung FSV in Verbindung steht.

Anhand der Figuren 1a bis 4 wird nun an einem Ausführungsbeispiel die Art der Ankopplung der beiden Koppelmechanismen M1, M2 an die Feststellvorrichtung FSV beschrieben, mit der sich erreichen lässt, dass die Feststellvorrichtung FSV nur dann entriegelt ist, wenn sowohl die Rückenlehne R in Richtung auf die Sitzfläche F vorgeklappt ist als auch der durch einen Lehnenhebel E gebildete Betätigungsmechanismus zusätzlich betätigt wurde.

In dem vorliegenden Ausführungsbeispiel umfassen die beiden Koppelmechanismen M1, M2 jeweils ein Zugmittel, wobei über das Zugmittel des einen Koppelmechanismus M1 die Rückenlehne R mit der Feststellvorrichtung FSV gekoppelt ist und über das Zugmittel des anderen Koppelmechanismus M2 der Entriegelungshebel E mit der Feststellvorrichtung FSV gekoppelt ist. Die Zugmittel der beiden Koppelmechanismen M1, M2 sind parallel zueinander geschaltet, d. h. sie verlaufen nebeneinander und voneinander entkoppelt zu der Feststellvorrichtung FSV. Dort sind die beiden Koppelmechanismen M1, M2 derart miteinander verknüpft, dass nur bei gemeinsamer Betätigung beider Koppelmechanismen M1, M2 - durch Vorklappen der Rückenlehne R einerseits und Betätigung des Entriegelungshebels E andererseits - eine Entriegelung der Feststellvorrichtung FSV erfolgt. Dies wird nachfolgend anhand der Figuren 1a bis 4 im Einzelnen beschrieben werden. In diesen ist die Ankopplung der Zugmittel der beiden in Figur 5 dargestellten Koppelmechanismen M1, M2 an eine nachfolgend mit dem Bezugszeichen 3 bezeichnete Feststellvorrichtung dargestellt.

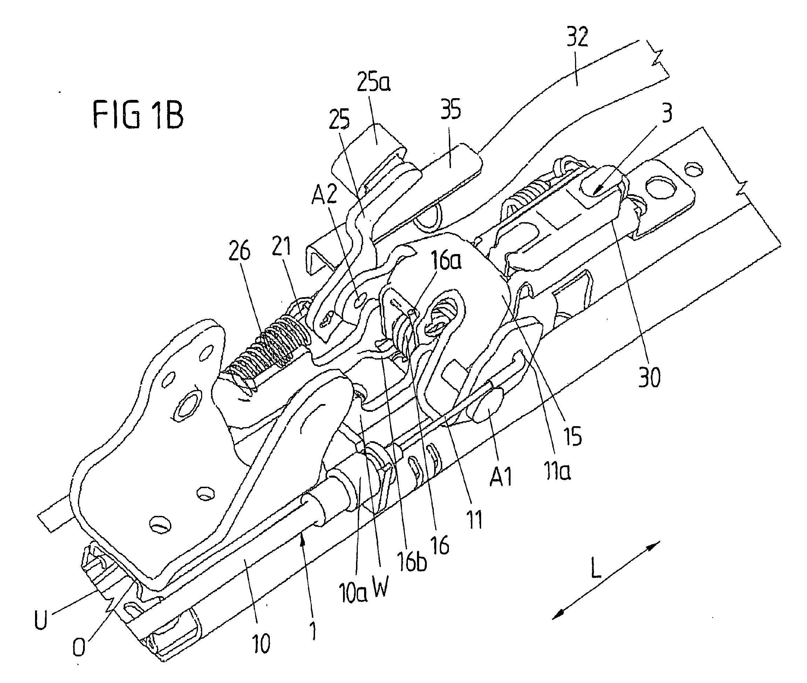

Das Zugmittel 11 des ersten Koppelmechanismus M1 (vgl. Figur 5) ist Bestandteil eines mit der Rückenlehne gekoppelten Bowdenzugs 1 mit einer Bowdenhülle 10, die sich im Bereich der Feststellvorrichtung 3 über eine Bowdenabstützung 10a an einem an der Oberschiene O vorgesehenen Haltewinkel W abstützt. Das Zugmittel 11 bildet die Seele des Bowdenzugs 1 und ist mit seinem der Feststellvorrichtung 3 zugeordneten Ende 11 a an einem an dem oberschienenfesten Haltewinkel W um eine Schwenkachse A1 verschwenkbar gelagerten ersten Hebel 15 festgelegt. Dieser ist mittels einer Drehfeder 16, die sich mit einem Ende 16a an dem ersten Hebel 15 und mit dem anderen Ende 16b an der Oberschiene O bzw. einem hiermit verbundenen Haltewinkel W abstützt, in Richtung auf den in Figur 1 gezeigten Zustand vorgespannt, in dem der Hebel 15 nicht zur Entriegelung der Feststellvorrichtung 3 auf diese einwirkt.

Das Zugmittel 21 des zweiten, mit dem Betätigungsmechanismus in Form eines Lehnenhebels E (vgl. Figur 5) gekoppelten Koppelmechanismus M2 ist ebenfalls unter Bildung eines Bowdenzugs 2 in einer Bowdenhülle 20 angeordnet. Die Bowdenhülle 20 ist mit ihrem der Feststellvorrichtung 3 zugeordneten Ende mittels einer Bowdenabstützung 20a an einem oberschienenfesten Haltewinkel B festgelegt. Das in der Bowdenhülle 20 als Seele geführte Zugmittel 21 ist mit seinem der Feststellvorrichtung 3 zugewandten Ende 21 a an einem zweiten Hebel 25 fixiert, der auf einer am ersten Hebel 15 angeordneten zweiten Schwenkachse A2 schwenkbar gelagert ist. Mit anderen Worten ausgedrückt ist der dem zweiten Koppelmechanismus M2 zugeordnete zweite Hebel 25 auf dem dem ersten Koppelmechanismus M1 zugeordneten ersten Hebel 15 schwenkbar gelagert.

Der zweite Hebel 25 weist einen Abschnitt (Fortsatz 25a) auf, über den er auf ein Auslöseelement 35 einwirken kann, das hierbei einen an der Feststellvorrichtung 3 vorgesehenen Entriegelungshebel 31 betätigt, durch den die Feststellvorrichtung 3 entriegelbar ist. Dabei ist der zweite Hebel 25 mittels einer Feder 26 (Schraubenfeder), die mit einem Ende 26a an dem zweiten Hebel 25 angreift und mit einem anderen Ende 26b an einem oberschienenfesten Haltelement (Haltewinkel W) angreift, elastisch in Richtung den Zustand vorgespannt, in dem der Fortsatz 25a nicht zur Entriegelung der Feststellvorrichtung 3 auf diese einwirken kann.

Die Entriegelung der Feststellvorrichtung 3 bei Betätigung des Entriegelungshebels 31 durch das Auslöseelement 35 erfolgt in der Weise, dass in einem Gehäuse 30 der Feststellvorrichtung 3 gelagerte und in den verriegelten Zustand elastisch vorgespannte Sperrelemente (Sperrzähne), welche die beiden Führungsschienen O, U der Sitzlängsführung zueinander arretieren, in bekannter Weise aus zugeordneten Rastöffnungen ausgehoben werden, so dass die Arretierung der beiden Führungsschienen O, U zueinander aufgehoben ist. Typischerweise ist hierbei das Gehäuse 30 der Feststellvorrichtung mit den Sperrzähnen an der als Oberschiene O ausgebildeten sitzseitigen Führungsschiene angeordnet, während die zugeordneten Raststellen, in die die Sperrzähne der Feststellvorrichtung 3 eingreifen können, an der karosserieseitigen Unterschiene U vorgesehen sind. Dadurch, dass die Feststellvorrichtung 3 (aus Sicherheitsgründen) stets in Richtung auf den verriegelten Zustand vorgespannt ist, entspricht der Normalzustand der Feststellvorrichtung 3 (ohne äußere Krafteinwirkung) dem verriegelten Zustand, in dem die beiden Führungsschienen O, U mittels der Feststellvorrichtung 3 zueinander arretiert sind.

Um die Feststellvorrichtung 3 zu entriegeln und hierdurch die beiden Führungsschienen O, U in Sitzlängsrichtung L zueinander verschieben zu können, ist einerseits ein Handhebel 32 vorgesehen, mit dem ein Sitzbenutzer manuell auf den Entriegelungshebel 31 der Feststellvorrichtung 3 einwirken kann, um diesen zu entriegeln und eine Neueinstellung der Sitzlängsposition vorzunehmen. Andererseits kann die Einwirkung auf den Entriegelungshebel 31 der Feststellvorrichtung 3, wie bereits dargelegt, auch über das durch den zweiten Hebel 25 betätigbare Auslöseelement 35 erfolgen, welches über den Handhebel 32 auf den Entriegelungshebel 31 der Feststellvorrichtung 3 einwirken kann.

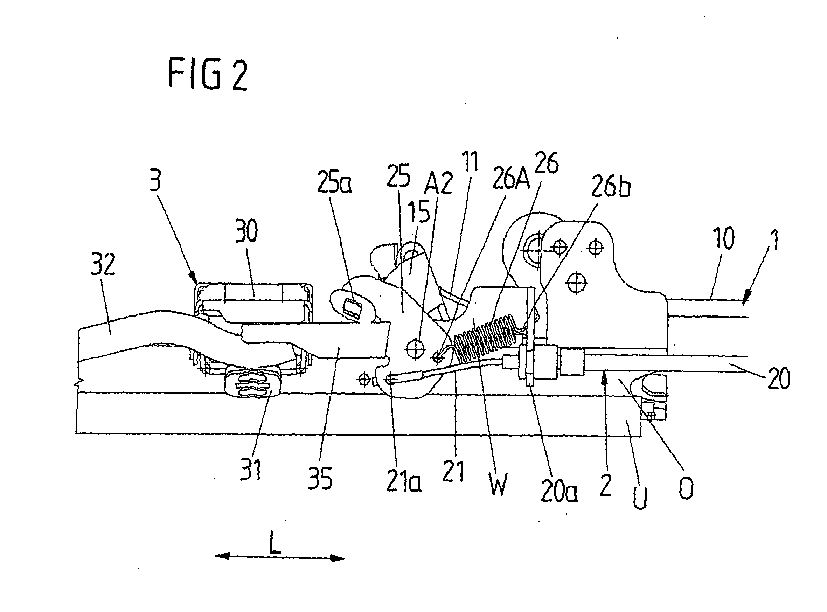

Wie nachfolgend anhand der Figuren 2 bis 4 gezeigt werden wird, ist eine Entriegelung der Feststellvorrichtung 3 über den zweiten Hebel 25 und das nachgeordnete Auslöseelement 35 nur dann möglich, wenn sowohl die Rückenlehne R (vgl. Figur 5) in Richtung auf die Sitzfläche F des Sitzgestells G vorgeklappt ist und außerdem das an der Rückenlehne R vorgesehene Betätigungselement E in Form eines Lehnenhebels betätigt ist.

In den Figuren 1a und 1b ist dabei zunächst der Zustand dargestellt, in dem sich gemäß Figur 5 die Rückenlehne R in einer Gebrauchsposition innerhalb des Gebrauchsbereichs B befindet und außerdem das Betätigungselement E nicht durch äußere Krafteinwirkung betätigt ist. In diesem Fall ist der Fortsatz 25a des zweiten Hebels 25 gemäß den Figuren 1a und 1b von dem nachgeordneten Auslöseelement 35 beabstandet, so dass keine Einwirkung auf die Feststellvorrichtung 3 erfolgt und diese sich im verriegelten Zustand befindet, also die beiden Führungsscheinen O, U in der aktuellen Sitzlängsposition zueinander arretiert.

Wird nun in diesem, in Figur 5 schematisch dargestellten Zustand der Kraftfahrzeugsitzanordnung die Rückenlehne R in Richtung auf die Sitzfläche F des Sitzgestells G vorgeklappt, ohne auch gleichzeitig das Betätigungselement E, z. B. durch manuelle Krafteinwirkung, zu betätigen, so entsteht im Bereich der Feststellvorrichtung FSV (in Figur 5) bzw. 3 der in Figur 2 dargestellte Zustand. In diesem ist der erste Betätigungshebel 15 durch Einwirkung des in der Bowdenhülle 10 geführten Zugmittels 11 des zugehörigen ersten Koppelmechanismus M1 (vgl. Figur 5) derart um seine Schwenkachse A1 verschwenkt, dass der am ersten Hebel 15 gelagerte zweite Hebel 25 mit seinem Fortsatz 25a in Richtung auf das Auslöseelement 35 abgesenkt ist. Mit anderen Worten ausgedrückt, bewirkt das Vorklappen der Rückenlehne R in Klapprichtung K auf die Sitzfläche F des Sitzgestells G (vgl. Figur 5) eine derartige Einwirkung auf den Bowdenzug 1 des ersten Koppelmechanismus M1, dass am zugehörigen Zugmittel 11 eine Zugkraft auftritt, die den ersten Hebel 15 um seine Achse A1 (entgegen dem Uhrzeigersinn) verschwenkt. Diese Schwenkbewegung ist derart, dass hierbei der zweite Schwenkhebel 25, welcher an einer am ersten Schwenkhebel 15 angeordneten Schwenkachse A2 gelagert ist, mit seinem Fortsatz 25a zu dem Auslöseelement 35 hin bewegt wird. Diese Bewegung hat einen solchen Umfang, dass sich der Fortsatz 25a des zweiten Hebels 25 dem Auslöseelement 35 annähert bzw. dieses sogar berührt; jedoch führt diese Bewegung noch nicht zu einer Auslenkung des Auslöseelementes 35, die ein Entriegeln der Feststellvorrichtung 3 über den Entriegelungshebel 31 zur Folge hätte.

Im Ergebnis führt somit das Vorklappen der Rückenlehne R in Richtung auf die Sitzfläche F des Sitzgestells G für sich genommen noch nicht zu einem Entriegeln der Feststellvorrichtung 3, sondern lediglich dazu, dass eine hierfür vorgesehene Komponente (zweiter Hebel 25) näher an das zugeordnete Auslöseelement 35 herangeführt wird.

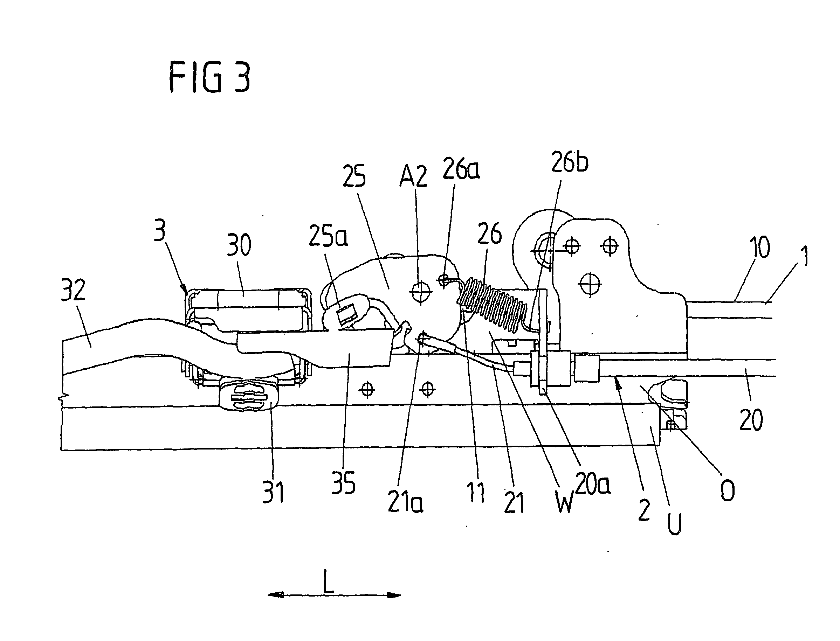

Wird umgekehrt ausgehend von dem in Figur 5 schematisch dargestellten Zustand zwar nicht die Rückenlehne R in Richtung auf die Sitzfläche F vorgeklappt, sondern lediglich das bevorzugt als Lehnenhebel ausgebildete Betätigungselement E betätigt, so wirkt der zweite Koppelmechanismus M2 über sein Zugmittel 21 auf den zweiten Hebel 25 ein. Der von der Betätigung des Lehnenhebels E nicht betroffene erste Hebel 15, der ja dem mit der Rückenlehne R gekoppelten ersten Koppelmechanismus M1 zugeordnet ist, bleibt dabei räumlich unverändert in der in den Figuren 1a und 1b dargestellten Lage, die einer im Gebrauchsbereich B befindlichen Rückenlehne R entspricht, vergl. Fig. 3.

Die Einwirkung des durch einen an der Rückenlehne R vorgesehenen Lehnenhebel gebildeten Betätigungselementes E auf den zugeordneten Koppelmechanismus M2 führt dazu, dass das in der Bowdenhülle 20 dieses Koppelmechanismus 2 geführte Zugmittel 21 mittels einer durch manuelle Betätigung des Lehnenhebels hervorgerufenen Zugkraft derart auf den zweiten Hebel 25 einwirkt, dass dieser (im Uhrzeigersinn) gegenüber dem in den Figuren 1a und 1b gezeigten Ausgangszustand, verschwenkt wird. Dies führt wiederum zu einer Annäherung des am zweiten Hebel 25 vorgesehenen Fortsatzes 25a in Richtung auf das Auslöseelement 35, ohne jedoch derart auf dieses einzuwirken, dass es zu einer Entriegelung der Feststellvorrichtung 3 mittels des Entriegelungshebels 31 kommt.

Im Ergebnis reicht also auch eine manuelle Bedienung des Betätigungselementes E in Form eines schwenkbar gelagerten Lehnenhebels alleine nicht aus, um die Feststellvorrichtung FSV (in Figur 5) bzw. 3 zu entriegeln; vielmehr wird auch hierbei der hierfür vorgesehene Fortsatz 25a des zweiten Hebels 25 lediglich dem nachgeordneten Auslöseelement 35 angenähert bzw. mit diesem in Kontakt gebracht, ohne jedoch eine Entriegelung der Feststellvorrichtung 3 durch Einwirkung auf den Entriegelungshebel 31 zu bewirken.

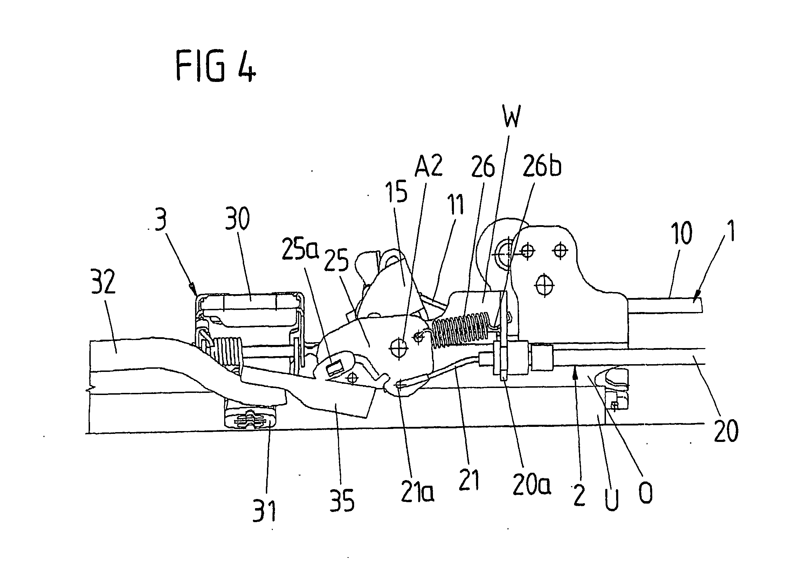

Figur 4 zeigt schließlich die Umgebung der Feststellvorrichtung 3 in einem Zustand, in dem ausgehend vom dem in Figur 5 schematisch dargestellten Zustand sowohl die Rückenlehne R in Richtung auf die Sitzfläche F des Sitzgestells G vorgeklappt worden ist als auch das Betätigungselement E in Form eines Lehnenhebels durch manuelle Krafteinwirkung derart bedient worden ist, dass eine Entriegelung der Feststellvorrichtung 3 erfolgt. Dies ist eine Folge des Zusammenwirkens beider Koppelmechanismen M1, M2 bzw. der zugehörigen ersten und zweiten Hebel 15, 25 durch das Vorklappen der Rückenlehne R auf die Sitzfläche F des Sitzgestells G bei gleichzeitig fortdauernder Einwirkung auf das Betätigungselement E an der Rückenlehne R.

Wie bereits anhand Figur 2 beschrieben, führt das Vorklappen der Rückenlehne R in Richtung auf die Sitzfläche F zu einer Schwenkbewegung des dem ersten Koppelmechanismus M1 zugeordneten ersten Hebels 15, bei der die an dem ersten Hebel 15 ausgebildete Schwenkachse A2 des zweiten Hebels 25 so bewegt wird, dass sich der zweite Hebel 25 mit seinem Fortsatz 25a dem nachgeordneten Auslöseelement 35 annähert. Wird nun in diesem Zustand, also bei vorgeklappter Rückenlehne R und dementsprechend verschwenktem ersten Hebel 15, auch das durch einen Lehnenhebel gebildete Betätigungselement E so in der hierfür vorgesehenen Weise (also z. B. durch Verschwenken des Lehnenhebels) bedient, dass zusätzlich, wie vorstehend erläutert, der dem zweiten Koppelmechanismus M2 zugeordnete zweite Hebel 25 mit seinem Fortsatz 25a in Richtung auf das Auslöseelement 35 bewegt (verschwenkt) wird, so führt dies schließlich zu einer so starken Einwirkung auf das Auslöselement 35, dass dieses über den Handhebel 32 auf den Entriegelungshebel 31 der Feststellvorrichtung 3 einwirkt und diese hierdurch entriegelt, wie in Figur 4 gezeigt.

Im Ergebnis führt also nur bei einer Kombination des Vorklappens der Rückenlehne R in Richtung auf die Sitzfläche F und einer manuellen Bedienung des an der Rückenlehne R vorgesehenen zusätzlichen Betätigungselementes E zu einer Bewegung des zweiten Hebels 25 in einem derartigen Ausmaß, dass dessen Fortsatz 25a in einer solchen Weise auf das nachgeordnete Auslöseelement 35 einwirkt, die zu einer Entriegelung der Feststellvorrichtung 3 führt. Die hierfür erforderliche Bewegung des zweiten Hebels 25 ist gewährleistet durch die Kopplung des zweiten Hebels 25 mit dem ersten Hebel 15, indem der zweite Hebel 25 auf einer am ersten Hebel 15 vorgesehenen Achse A2 gelagert ist.

So führt die beim Vorklappen der Rückenlehne R in Richtung auf die Sitzfläche F des Sitzgestells G erzeugte Schwenkbewegung des ersten Hebels 15 zu einer Annäherung des Fortsatzes 25a des zweiten Hebels 25 an das nachgeordnete Auslöseelement 35, und zwar wegen der hiermit verbundenen Bewegung der Schwenkachse A2 des zweiten Hebels 25. Wird diese Bewegung, wie beschrieben, ergänzt durch eine Schwenkbewegung des zweiten Hebels 25 selbst, hervorgerufen durch manuelles Bedienen des an der Rückenlehne R vorgesehenen Betätigungselementes E, so reicht diese Kombination einer Bewegung der Schwenkachse A2 des zweiten Hebels 25 mit einer Schwenkbewegung des zweiten Hebels 25 um diese Achse A2 aus, um die Entriegelung der Feststellvorrichtung 3 durch Einwirkung auf den hierfür vorgesehenen Entriegelungshebel 31 herbeizuführen.

Im Ergebnis ist also die Feststellvorrichtung 3 zur Ausübung der Easy-Entry-Funktion, also dem Vorverlagern des in Figur 5 dargestellten Kraftfahrzeugsitzes mittels der hierfür vorgesehenen Schienenlängsführung O, U, nur dann entriegelt, wenn gleichzeitig sowohl die Rückenlehne R in Richtung auf die Sitzfläche F des Sitzgestells G vorgeklappt ist und außerdem das an der Rückenlehne vorgesehene Betätigungselement E zur Entriegelung der Feststellvorrichtung 3 betätigt ist. Ist nur eine dieser beiden Bedingungen nicht erfüllt, befindet sich also entweder die Rückenlehne R in ihrem Gebrauchsbereich B oder ist das Betätigungselement E nicht zur Entriegelung der Feststellvorrichtung 3 betätigt, so befindet sich die Feststellvorrichtung 3 im verriegelten Zustand, so dass die beiden Führungsschienen O, U in ihrer aktuellen Position zueinander arretiert sind. Denn die Feststellvorrichtung 3 ist aus Sicherheitsgründen so auszulegen, dass sie sich immer dann im verriegelten Zustand befindet, wenn nicht eine aktive Einwirkung auf die Feststellvorrichtung 3 zur Entriegelung erfolgt. So kann sichergestellt werden, dass sich der entsprechende Kraftfahrzeugsitz im Normalfall hinsichtlich seiner Sitzlängsposition im arretierten Zustand befindet, also nicht unter der Einwirkung äußerer Kräfte frei in Sitzlängsrichtung L verschoben werden kann.

Die Besonderheit des anhand der Figuren 1a bis 5 beschriebenen Ausführungsbeispieles liegt darin, dass hier zur Entriegelung der Feststellvorrichtung 3 bei Ausübung der Easy-Entry-Funktion nicht das Vorklappen der Rückenlehne R alleine oder die Betätigung eines an der Rückenlehne R vorgesehenen Betätigungselementes E alleine genügen, um die Entriegelung der Feststellvorrichtung herbeizuführen. Vielmehr muss sowohl die Rückenlehne R in Richtung auf die Sitzfläche F vorgeklappt als auch das Betätigungselement E betätigt sein. Dies hat den Vorteil, dass sich der Kraftfahrzeugsitz bei Ausübung der Easy-Entry-Funktion nur dann in einem Zustand befindet, in dem er sich in Sitzlängsrichtung L verschieben lässt, wenn eine Bedienperson auf das Betätigungselement E einwirkt, um dieses in einem Zustand zu halten, in dem es über den nachgeordneten Koppelmechanismus M2 zur Entriegelung der Feststellvorrichtung 3 auf den zugehörigen zweiten Hebel 25 einwirkt.

Das Betätigungselement E ist dabei vorteilhaft in Richtung auf den Zustand vorgespannt, in dem es keine Entriegelung der Feststellvorrichtung 3 bewirken kann. Die Feststellvorrichtung 3 kann daher nur dann entriegelt sein, wenn bei vorgeklappter Rückenlehne R aktiv auf das Betätigungselement E eingewirkt wird, um dieses in einem Zustand zu halten, in dem der nachgeordnete Koppelmechanismus M2 eine Entriegelung der Feststellvorrichtung 3 unterstützt.

Diese Art der Auslösung des Easy-Entry-Mechanismus durch kombiniertes Vorklappen der Rückenlehne R und Betätigung eines Betätigungselementes E (entgegen einer elastischen Vorspannung) hat den Vorteil, dass eine erhöhte Sicherheit von Fahrzeuginsassen im Fall eines Aufpralls durch ein Drittfahrzeug bei Ausübung der Easy-Entry-Funktion besteht. Denn bei einer solchen Erschütterung wird die fortdauernde manuelle Einwirkung auf das Betätigungselement E automatisch unterbrochen, da die entsprechende Bedienperson nicht in fortdauernder Betätigung des Betätigungselementes E verharren wird, was dann zur sofortigen Verriegelung der Feststellvorrichtung und einer hiermit verbundenen Arretierung der beiden Führungsschienen O, U führt.

In einer Doppelfunktion kann das vorteilhaft als Lehnenhebel ausgebildete Betätigungselement E auch dazu verwendet werden, um durch Entriegelung einer Rückenlehnensperre überhaupt erst das Vorklappen der Rückenlehne R in Richtung auf die Sitzfläche F zu ermöglichen. Wird das Betätigungselement E in einer solchen Doppelfunktion einerseits in bekannter Weise zur Entriegelung der Rückenlehne R verwendet, um deren Vorklappen zu ermöglichen, und andererseits erfindungsgemäß zur Entriegelung der der Sitzlängsführung O, U zugeordneten Feststellvorrichtung, so ist zu beachten, dass ein einmaliges Betätigen des Betätigungselementes E zum Vorklappen der Rückenlehne R noch nicht ausreicht, um auch die Feststellvorrichtung zu entriegeln. Denn hierfür ist es erforderlich, dass das Betätigungselement E in dem Moment durch Krafteinwirkung betätigt ist, indem sich die Rückenlehne R im vorgeklappten Zustand befindet.

## Patentansprüche

1. Kraftfahrzeugsitzanordnung mit
- einem Sitzgestell (G),
- einer schwenkbar am Sitzgestell (G) gelagerten Rückenlehne (R), die aus mindestens einer Gebrauchsposition, in der sie zum Abstützen des Rückens eines Sitzbenutzers dient, in Richtung auf eine Sitzfläche (F) des Sitzgestells (G) vorklappbar ist,
- einer Längsführung, mit der das Sitzgestell (G) zur Einstellung der Sitzlängsposition entlang einer Sitzlängsrichtung (L) bewegbar ist,
- einer Feststellvorrichtung (FSV, 3) zum Arretieren des Sitzgestells (G) in einer zuvor eingestellten Sitzlängsposition und
- einem ersten Koppelmechanismus (M1), über den die Feststellvorrichtung (FSV,3) derart mit der Rückenlehne (R) gekoppelt ist, dass durch Vorklappen der Rückenlehne (R) in Richtung auf die Sitzfläche (F) die Feststellvorrichtung (FSV, 3) entriegelbar ist,
**gekennzeichnet durch**
einen zweiten Koppelmechanismus (M2), über den die Feststellvorrichtung (FSV,3) derart mit einem von der Rückenlehne (R) verschiedenen Betätigungsmechanismus (E) gekoppelt ist, dass die Feststellvorrichtung (FSV, 3) nur dann entriegelt ist, wenn die Rückenlehne (R) in Richtung auf die Sitzfläche (F) vorgeklappt ist und der Betätigungsmechanismus (E) zur Entriegelung der Feststellvorrichtung (FSV, 3) betätigt ist.

2. Kraftfahrzeugsitzanordnung nach Anspruch 1, **dadurch gekennzeichnet, dass** der Betätigungsmechanismus (E) in Richtung auf einen Zustand vorbelastet ist, in dem der nachgeordnete Koppelmechanismus (M2) nicht zur Entriegelung der Feststellvorrichtung (FSV, 3) auf diese einwirkt, und dass der Betätigungsmechanismus (E) nur unter fortdauernder Krafteinwirkung in einem zweiten Zustand gehalten werden kann, in dem der nachgeordnete Koppelmechanismus (M2) zur Entriegelung der Feststellvorrichtung (FSV, 3) auf diese einwirken kann.

3. Kraftfahrzeugsitzanordnung nach einem der vorhergehenden Ansprüche, **dadurch gekennzeichnet, dass** der Betätigungsmechanismus (E) elastisch in Richtung auf den Zustand vorgespannt ist, in dem der zweite Koppelmechanismus (M2) nicht zur Entriegelung der Feststellvorrichtung (FSV, 3) auf diese einwirkt.

4. Kraftfahrzeugsitzanordnung nach Anspruch 3, **dadurch gekennzeichnet, dass** dem Betätigungsmechanismus (E) mindestens ein elastisches Element zur Erzeugung der Vorspannung zugeordnet ist.

5. Kraftfahrzeugsitzanordnung nach einem der vorhergehenden Ansprüche, **dadurch gekennzeichnet, dass** der Betätigungsmechanismus (E) manuell betätigbar ist.

6. Kraftfahrzeugsitzanordnung nach einem der vorhergehenden Ansprüche, **dadurch gekennzeichnet, dass** der Betätigungsmechanismus (E) ein schwenkbar gelagertes Betätigungselement, insbesondere in Form eines Betätigungshebels, umfasst.

7. Kraftfahrzeugsitzanordnung nach einem der vorhergehenden Ansprüche, **dadurch gekennzeichnet, dass** der Betätigungsmechanismus (E) an der Rückenlehne (R) angeordnet ist.

8. Kraftfahrzeugsitzanordnung nach einem der vorhergehenden Ansprüche, **dadurch gekennzeichnet, dass** der Betätigungsmechanismus (E) zusätzlich zur Entriegelung einer Rückenlehnenverriegelung dient, um die Rückenlehne (R) aus einer jeweiligen Gebrauchsposition in Richtung auf die Sitzfläche (F) vorklappen zu können.

9. Kraftfahrzeugsitzanordnung nach einem der vorhergehenden Ansprüche, **dadurch gekennzeichnet, dass** die beiden Koppelmechanismen (M1, M2) parallel zueinander geschaltet sind.

10. Kraftfahrzeugsitzanordnung nach einem der vorhergehenden Ansprüche, **dadurch gekennzeichnet, dass** der erste Koppelmechanismus (M1) ein Zugmittel (11) umfasst, über das die vorklappbare Rückenlehne (R) mit der Feststellvorrichtung (3) in Wirkverbindung bringbar ist.

11. Kraftfahrzeugsitzanordnung nach einem der vorhergehenden Ansprüche, **dadurch gekennzeichnet, dass** der zweite Koppelmechanismus (M2) ein Zugmittel (21) umfasst, über die der Betätigungsmechanismus (E) mit der Feststellvorrichtung (3) in Wirkverbindung bringbar ist.

12. Kraftfahrzeugsitzanordnung nach einem der vorhergehenden Ansprüche, **dadurch gekennzeichnet, dass** einer der beiden Koppelmechanismen (M1, M2) über eine Komponente (25) des anderen der beiden Koppelmechanismen (M2, M1) mit der Feststellvorrichtung in Wirkverbindung bringbar ist.

13. Kraftfahrzeugsitzanordnung nach Anspruch 12, **dadurch gekennzeichnet, dass** die Komponente (25) des anderen der beiden Koppelmechanismen (M2, M1) beweglich auf einer Komponente (15) des einen der beiden Koppelmechanismen (M1, M2) gelagert ist.

14. Kraftfahrzeugsitzanordnung nach Anspruch 13, **dadurch gekennzeichnet, dass** die Komponente (25) des anderen der beiden Koppelmechanismen (M2, M1) schwenkbar auf einer Komponente (15) des einen der beiden Koppelmechanismen (M1, M2) gelagert ist.

15. Kraftfahrzeugsitzanordnung nach Anspruch 13 oder 14, **dadurch gekennzeichnet, dass** die Lagerung derart ist, dass bei Betätigung des einen der beiden Koppelmechanismen (M1, M2) die Komponente (25) des anderen der beiden Koppelmechanismen (M2, M1) an ein Auslöseelement (35) zur Entriegelung der Feststellvorrichtung (3) herangeführt wird.

16. Kraftfahrzeugsitzanordnung nach Anspruch 15, **dadurch gekennzeichnet, dass** die Komponente (25) des anderen Koppelmechanismus (M2) bei Betätigung des anderen Koppelmechanismus (M2) zur Entriegelung der Feststellvorrichtung (3) auf diese einwirkt, wenn sie durch die Komponente (15) des einen Koppelmechanismus (M1) an das Auslöseelement (35) herangeführt ist, wodurch eine Entriegelung der Feststellvorrichtung (FSV, 3) herbeigeführt wird.

17. Kraftfahrzeugsitzanordnung nach einem der Ansprüche 13 bis 16, **dadurch gekennzeichnet, dass** beide Komponenten (15, 25) schwenkbar gelagert sind.

## Claims

1. Motor vehicle seat arrangement comprising:
- a seat frame (G);
- a backrest (R) being swivel-mounted at the seat frame (G) which backrest may be folded forward from a use position, in which it serves for supporting the back of a seat user, towards a seat surface (F) of the seat frame (G);
- a longitudinal guiding by means of which the seat frame (G), for adjustment of the longitudinal seat position, is movable along a longitudinal direction of the seat (L);
- a locking device (FSV, 3) for arresting the seat frame (G) in a longitudinal seat position previously adjusted; and
- a first coupling mechanism (M1) via which the locking device (FSV, 3) is coupled to the backrest (R) in such a way that the locking device (FSV, 3) may be released by folding the backrest (R) forward towards the seat surface (F),
**characterized by**
a second coupling mechanism (M2) via which the locking device (FSV, 3) is coupled in such a way to an actuation mechanism (E) being different from the backrest (R) that the locking device (FSV, 3) is solely released when the backrest (R) is folded forward towards the seat surface (F) and the actuation mechanism (E) for the release of the locking device (FSV, 3) is activated.

2. Motor vehicle seat arrangement according to claim 1, **characterized in that** the actuation mechanism (E) is biased towards a state in which the subordinated coupling mechanism (M2) does not act on the locking device (FSV, 3) for releasing the latter, and that the actuation mechanism (E) can be solely held in a second state due to a continuously applied force, in which second state the subordinated coupling mechanism (M2) may act on the locking mechanism (FSV, 3) in order to release it.

3. Motor vehicle seat arrangement according to any one of the preceding claims, **characterized in that** the actuation mechanism (E) is elastically pretensioned towards the state in which the second coupling mechanism (M2) does not act on the locking device (FSV, 3) for releasing it.

4. Motor vehicle seat arrangement according to claim 3, **characterized in that** the actuation mechanism (E) is assigned at least one elastic element for the generating the pretensioning.

5. Motor vehicle seat arrangement according to any one of the preceding claims, **characterized in that** the actuation mechanism (E) may be manually activated.

6. Motor vehicle seat arrangement according to any one of the preceding claims, **characterized in that** the actuation mechanism (E) comprise a swivel-mounted actuation element in particular in the form of an actuation lever.

7. Motor vehicle seat arrangement according to any one of the preceding claims, **characterized in that** the actuation mechanism (E) is arranged at the backrest (R).

8. Motor vehicle seat arrangement according to any one of the preceding claims, **characterized in that** the actuation mechanism (E) additionally serves for the release of a backrest latching device in order to allow for folding the backrest (R) from a respective use position towards the seat surface (F).

9. Motor vehicle seat arrangement according to any one of the preceding claims, **characterized in that** both coupling mechanisms (M1, M2) are connected in parallel with respect to each other.

10. Motor vehicle seat arrangement according to any one of the preceding claims, **characterized in that** the first coupling mechanism (M1) comprise a tension means (11) via which the backrest (R), which may be folded forward, can be brought into operative connection with the locking device (3).

11. Motor vehicle seat arrangement according to any one of the preceding claims, **characterized in that** the second coupling device (M2) comprises a tension means (21) via which the actuation mechanism (E) may be brought into operative connection with the locking device (3).

12. Motor vehicle seat arrangement according to any one of the preceding claims, **characterized in that** one of the two coupling mechanisms (M1, M2) may be brought into operative connection with the locking device via a component (25) of the other one of the two coupling mechanisms (M1, M2).

13. Motor vehicle seat arrangement according to claim 12, **characterized in that** the component (25) of the other one of the two coupling mechanisms (M2, M1) is mounted movably on a component (15) of the one of the two coupling mechanisms (M1, M2).

14. Motor vehicle seat arrangement according to claim 13, **characterized in that** the component (25) of the other one of the two coupling mechanisms (M2, M1) is mounted pivotably on a component (15) of the one of the two coupling mechanisms (M1, M2)

15. Motor vehicle seat arrangement according to claim 13 or 14, **characterized in that** the mounting is such that, upon actuation of the one of the two coupling mechanisms (M1, M2), the component (25) of the other one of the two coupling mechanisms (M2, M1) is advanced towards a release element (35) for releasing the locking device (3).

16. Motor vehicle seat arrangement according to claim 15, **characterized in that** the component (25) of the other coupling mechanism (M2) upon actuation of the other coupling mechanism (M2) for releasing the locking device (3) acts on the locking device, when it is advanced towards the release element (35) by the component (15) of the one coupling mechanism (M1), by means of which a release of the locking device (FSV, 3) is effectuated.

17. Motor vehicle seat arrangement according to any one of the claims 13 to 16, **characterized in that** both components (15, 25) are swivel-mounted.

## Revendications

1. Agencement de siège d'automobile, comprenant
- un châssis de siège (G),
- un dossier (R) monté en pivotement sur le châssis de siège (G), lequel peut être rabattu depuis au moins une position d'utilisation dans laquelle il sert à soutenir le dos d'un utilisateur, en avant en direction d'une surface d'assise (F) du châssis de siège (G),
- un guidage longitudinal au moyen duquel le châssis de siège (G) est déplaçable pour le réglage de la position longitudinale du siège le long d'une direction longitudinale (L) du siège,
- un dispositif d'immobilisation (FSV, 3) pour arrêter le châssis de siège (G) dans une position longitudinale du siège préalablement réglée, et
- un premier mécanisme de couplage (M1), via lequel le dispositif d'immobilisation (FSV, 3) est couplé au dossier (R) de telle manière que le dispositif d'immobilisation (FSV, 3) peut être déverrouillé en rabattant le dossier (R) vers l'avant en direction de la surface d'assise (F),
**caractérisé par**
un deuxième mécanisme de couplage (M2), via lequel le dispositif d'immobilisation (FSV, 3) est accouplé à un mécanisme d'actionnement (E) différent du dossier (R) de telle manière que le dispositif d'immobilisation (FSV, 3) est déverrouillé uniquement quand le dossier (R) est rabattu vers l'avant en direction de la surface d'assise (F) et le mécanisme d'actionnement (E) destiné au déverrouillage du dispositif d'immobilisation (FSV, 3) est actionné.

2. Agencement de siège d'automobile selon la revendication 1, **caractérisé en ce que** le mécanisme d'actionnement (E) est préchargé en direction d'un état dans lequel le mécanisme d'accouplement (M2) associé à la suite n'agit pas sur celui-ci pour le déverrouillage du dispositif d'immobilisation (FSV, 3), et **en ce que** le mécanisme d'actionnement (E) peut être maintenu uniquement sous l'action permanente d'une force dans un deuxième état dans lequel le mécanisme d'accouplement (M2) associé à la suite peut agir sur celui-ci pour le déverrouillage du dispositif d'immobilisation (FSV, 3).

3. Agencement de siège d'automobile selon l'une des revendications précédentes, **caractérisé en ce que** le mécanisme d'actionnement (E) est précontraint élastiquement en direction de l'état dans lequel le deuxième mécanisme d'accouplement (M2) n'agit pas sur celui-ci pour déverrouiller le dispositif d'immobilisation (FSV, 3).

4. Agencement de siège d'automobile selon la revendication 3, **caractérisé en ce qu'**au moins un élément élastique est associé au mécanisme d'actionnement (E) pour générer la précontrainte.

5. Agencement de siège d'automobile selon l'une des revendications précédentes, **caractérisé en ce que** le mécanisme d'actionnement (E) est susceptible d'être actionné manuellement.

6. Agencement de siège d'automobile selon l'une des revendications précédentes, **caractérisé en ce que** le mécanisme d'actionnement (E) comprend un élément d'actionnement monté pivotant, en particulier sous la forme d'un levier d'actionnement.

7. Agencement de siège d'automobile selon l'une des revendications précédentes, **caractérisé en ce que** le mécanisme d'actionnement (E) est agencé sur le dossier (R).

8. Agencement de siège d'automobile selon l'une des revendications précédentes, **caractérisé en ce que** le mécanisme d'actionnement (E) serre additionnellement au déverrouillage d'un verrouillage de dossier, afin de pouvoir rabattre le dossier (R) vers l'avant depuis une position d'utilisation respective en direction de la surface d'assise (F).

9. Agencement de siège d'automobile selon l'une des revendications précédentes, **caractérisé en ce que** les deux mécanismes d'accouplement (M1, M2) sont branchés parallèlement l'un à l'autre.

10. Agencement de siège d'automobile selon l'une des revendications précédentes, **caractérisé en ce que** le premier mécanisme d'accouplement (M1) comprend un organe de traction (11) via lequel le dossier (R) rabattable vers l'avant peut être amené en coopération avec le dispositif d'immobilisation (3).

11. Agencement de siège d'automobile selon l'une des revendications précédentes, **caractérisé en ce que** le deuxième mécanisme d'accouplement (M2) comprend un organe de traction (21) via lequel le mécanisme d'actionnement (E) peut être amené en coopération avec le dispositif d'immobilisation (3).

12. Agencement de siège d'automobile selon l'une des revendications précédentes, **caractérisé en ce que** l'un des deux mécanismes d'accouplement (M1, M2) peut être amené en coopération avec le dispositif d'immobilisation via une composante (25) de l'autre des deux mécanismes d'accouplement (M2, M1).

13. Agencement de siège d'automobile selon la revendication 12, **caractérisé en ce que** la composante (25) de l'autre des deux mécanismes d'accouplement (M2, M1) est monté de façon déplaçable sur une composante (15) du premier des deux mécanismes d'accouplement (M1, M2).

14. Agencement de siège d'automobile selon la revendication 13, **caractérisé en ce que** la composante (25) de l'autre des deux mécanismes d'accouplement (M2, M1) est monté en pivotement sur une composante (15) du premier des deux mécanismes d'accouplement (M1, M2).

15. Agencement formant siège d'automobile selon la revendication 13 ou 14, **caractérisé en ce que** le montage est tel que, lors d'un actionnement de l'un des deux mécanismes d'accouplement (M1, M2) la composante (25) de l'autre des deux mécanismes d'accouplement (M2, M1) est approchée d'un élément de déclenchement (35) pour le déverrouillage du dispositif d'immobilisation (3).

16. Agencement de siège d'automobile selon la revendication 15, **caractérisé en ce que**, lors de l'actionnement de l'autre mécanisme d'accouplement (M2), la composante (25) de l'autre mécanisme d'accouplement (M2) agit sur le dispositif d'immobilisation (3) pour le déverrouillage de celui-ci, quand il est approché de l'élément de déclenchement (35) par la composante (15) du premier mécanisme d'accouplement (M1), ce qui entraîne un déverrouillage du dispositif d'immobilisation (FSV, 3).

17. Agencement de siège d'automobile selon l'une des revendications 13 à 16, **caractérisé en ce que** les deux composantes (15, 25) sont montées en pivotement.
